# EUROPEAN PATENT SPECIFICATION

(11) **EP 3 799 237 B1**
(45) Date of publication and mention of the grant of the patent: **02.12.2026**
(21) Application number: 20199253.4
(22) Date of filing: 30.09.2020
(51) Int. Cl.: H02G 3/32, F16B 2/10, F16L 3/10, H02G 3/04

(54) **CABLE CLEAT ASSEMBLY**
KABELKLEMMENANORDNUNG
ENSEMBLE SERRE-CÂBLE

(30) Priority: 30.09.2019 US 201916587190
(43) Date of publication of application: 31.03.2021
(73) Proprietor: Panduit Corp., Tinley Park, Illinois 60487 (US)
(72) Inventor: Kruzel, Mateusz, Orland Park, Illinois 60487 (US); Christensen, Kenneth A., Naperville, Illinois 60563 (US); Rouleau, Rodney G., Manhattan, Illinois 60442 (US); Putnam, Brett J., Plainfield, Illinois 60586 (US); Campbell, Mark D., Beecher, Illinois 60401 (US); Kandasamy, Balaji, Naperville, Illinois 60565 (US)
(74) Representative: Roberts, Gwilym Vaughan

(56) References cited:
- DE-C- 663 592
- GB-A- 1 213 185
- JP-A- 2000 197 244
- US-A1- 2009 139 156
- US-B2- 10 407 985

## Description

### Field of the Invention

The present invention relates to cable cleats, and more particularly to a cable cleat for securing cables during a short circuit event.

### Background of the Invention

Cable cleats have been typically used to manage and secure 3-phase power cables of various sizes in a trefoil arrangement along a ladder rack or tray. The cable cleats secure the cables laterally and axially. The cable cleat must be rigid enough to retain cables during short circuit events, where electromagnetic forces can cause the cables to repel one another at extremely high forces. If a short circuit event occurs, the cables can separate when exposed to a large amount of force. Cable cleats are generally designed to resist the movement of cables during these short circuit events to prevent damage to people and property.

It is desirable to provide an improved cable cleat design that prevents movement of the cables during a short circuit event.

DE663592 C describes, according to its description, a clamp for electrical lines with clamping jaws that can be adjusted by pivoting for different diameters. The base plate of the first embodiment consists of two parts a and b in such a way that it is divided along its length. The two parts a and b form the pivot bearing for the pin c of the clamping jaws d. After inserting the pins c into their pivot bearings, the two parts a and b are connected to each other with cap screws e. For the purpose of fastening to the wall or the like, the base plate a, b has an opening f through which the fastening screw or the like reaches. Both jaws d can be pivoted from an initial position to an end position in which they meet with their free ends. They can be locked in any intermediate position to prevent them from swinging back into the initial position. The adjusting screws g are used for this purpose, which are inserted in nut threads of the clamping jaws d and lie with their heads in recesses h in the latter. The lower ends of the adjusting screws g stand on support surfaces i of the base plate a, b; whereby the clamping jaws d are secured against pivoting back into the initial position.

US 2009/139156 A1 describes, according to its abstract, a beam clamp including a clamp base and a rotational portion. The base includes an interior cavity and an external surface. The base and the rotational portion are pivotably connected by a mateable device. The rotational portion extends into the interior cavity of the base and the rotational portion includes a torsion spring.

JP 2000 197244 A describes, according to its abstract, attaching a retaining member 25 onto a corrugated tube 21. Retaining bodies 27, 28 are positioned at the corrugated tube 21 so as to fit a protrusion 31 to an annular projecting part 22 with the retaining bodies 27, 28 opened, and the retaining bodies 27, 28 are closed through a hinge 26, so that the protrusion 31 is engaged with the annular projecting part 22. The corrugated tube 21 is clamped by the retaining bodies 27, 28, and engaging projecting parts 29a, 29b are engaged with engaging recessed parts 30a, 30b to attach the retaining member 25 onto the corrugate tube 21. A plurality of protrusions 31 capable of being engaged with the annular projecting part 22 are formed at the retaining body 28, and the holding member 25 is fixed to the corrugated tube 21 firmly, preventing the retaining member 25 from moving in the longitudinal and circumferential directions of the corrugated tube 21.

GB 1213185 A describes, according to its abstract, a cable cleat comprising a base member to be secured to a support surface, and two clamping arms releasably attached at their inner ends to the base member at spaced positions thereon and extending from a front face thereof, the arms being adapted to be turned towards one another to embrace a cable or a group of two or more cables extending across said front face, and the outer ends of the arms being engageable by means for drawing them towards one another to clamp the cables between the arms and the base member, wherein, at each position of attachment of an arm, the front face of the base member has a rectangular slot. Opening in the front wall of a rear recess, the inner boundary surface of the slot, at the side thereof which is nearer to the other slot, meets the front wall of the recess at an angle to form a sharp rear edge, and at the opposite side of the slot its outer boundary surface diverges relatively to the inner boundary surface and inwardly to the recess, the inner end of each arm is extended as a generally rectangular section lug which is freely slidable with a clearance longitudinally into and out of its associated slot respectively to attach the arm to and detach it from the base member, so that each arm can be rocked on the front of the outer boundary surface of its slot towards and away from the other arm, and the lugs will engage behind said outer boundary surfaces of the slots to firmly inter-lock the arms with the base member when the arms are in clamping engagement with the cable or group of cables, and on the side of each lug which is adjacent said inner boundary surface of its slot there is a main hooking projection extending linearly and transversely across the lug to be adapted to engage behind said sharp rear edge, whereby when the cleat is mounted with one arm above the other, the lower arm can be rocked on the front of the outer boundary surface of its slot to engage the main hooking projection 'behind said sharp rear edge to limit the extent of rocking movement of the lower arm away from the upper arm.

US10407985 B2 describes, according to its abstract, a bracket assembly that secures cables to rungs of a ladder rack. The bracket has a bottom portion, sidewalls, and an upper portion. The bracket is positioned under the rectangular body of the ladder rung and secured thereto with an interference fit. At least one cable is positioned on the ladder rung and the upper portion of the bracket. A tie secures the cable to the upper portion of the bracket.

### Summary of the Invention

The invention of the present European patent is set out in the appended independent claim. Some optional features of the invention are set out in the dependent claims.

A cable cleat assembly secures a bundle of cables to a ladder rack. The cable cleat assembly includes a base and two side bodies. The base is secured to the ladder rack. The two side bodies are pivotally mounted to the ends of the base. Each side body has a first end, a middle section, and a second end. The first end of each side body includes a mounting member. The mounting member has a peg extending from each side of the mounting member and a circular rib. The pegs are mounted in the base and the circular rib engages a slot between alignment tabs extending from the base to enable the side bodies to pivot from an open position to a closed position around the bundle of cables on the ladder rack.

### Brief Description of the Drawings

FIG. 1 is a perspective view of a cable cleat assembly positioned on an insulating spacer, an embodiment useful for understanding the invention.
FIG. 2 is a perspective view of the side bodies of the cable cleat assembly of FIG. 1.
FIG. 3 is a perspective view of the base of the cable cleat assembly of FIG. 1.
FIG. 4 is a front view of the base of FIG. 3.
FIG. 5 is a front view of the cable cleat assembly of FIG. 1.
FIG. 6 is a perspective view of the cable cleat assembly of FIG. 1 with securing tabs.
FIG. 7 is a sectional view of the cable cleat assembly of FIG. 1 with the securing tabs of the base bent into position.
FIG. 8 is a perspective view of an open cable cleat assembly of FIG. 1 positioned on a ladder rack.
FIG. 9 is a sectional view of the cable cleat assembly of FIG. 1 installed around a trefoil cable arrangement and secured to a ladder rack by a fastener.
FIG. 10 is a perspective view of the cable cleat assembly of FIG. 1 secured to a ladder rack by a securing bracket.
FIG. 11 is a sectional view of the cable cleat assembly of FIG. 10.
FIG. 12 is a perspective view of the cable cleat assembly of FIG. 10 secured to a bracket and positioned to be installed on a ladder rack.
FIG. 13 is a perspective view of the cable cleat assembly with an alternative base positioned on an insulating spacer.
FIG. 14 is a perspective view of the base of the cable cleat assembly of FIG. 13.
FIG. 15 is a sectional view of the base of FIG. 14.
FIG. 16 is a sectional view of the cable cleat assembly of FIG. 13.
FIG. 17 is a perspective view of the cable cleat assembly of FIG. 13 with a blind rivet assembly.
FIG. 18 is a sectional view of the cable cleat assembly of FIG. 17.
FIG. 19 is a perspective view of an open cable cleat assembly of FIG. 13 positioned on a ladder rack.
FIG. 20 is a sectional view of the cable cleat assembly of FIG. 13 installed around a trefoil cable arrangement and secured to a ladder rack by a fastener.
FIG. 21 is a perspective view of the cable cleat assembly of FIG. 13 secured to a ladder rack by a securing bracket.
FIG. 22 is a sectional view of the cable cleat assembly of FIG. 21.
FIG. 23 is a perspective view of a cable cleat assembly according to the invention.
FIG. 24 is a perspective view of the base of FIG. 23.
FIG. 25 is a perspective view of the side body of FIG. 23.
FIG. 26 is an exploded perspective view of the base and side body of FIG. 23.
FIG. 27 is a perspective view of the assembled base and side body of FIG. 26.
FIG. 28 is a cross sectional view of the assembled base and side body of FIG. 27.
FIG. 29 is a perspective view of the assembled base and side body of FIG. 27 with the side body rotated to a closed position

### Detailed Description

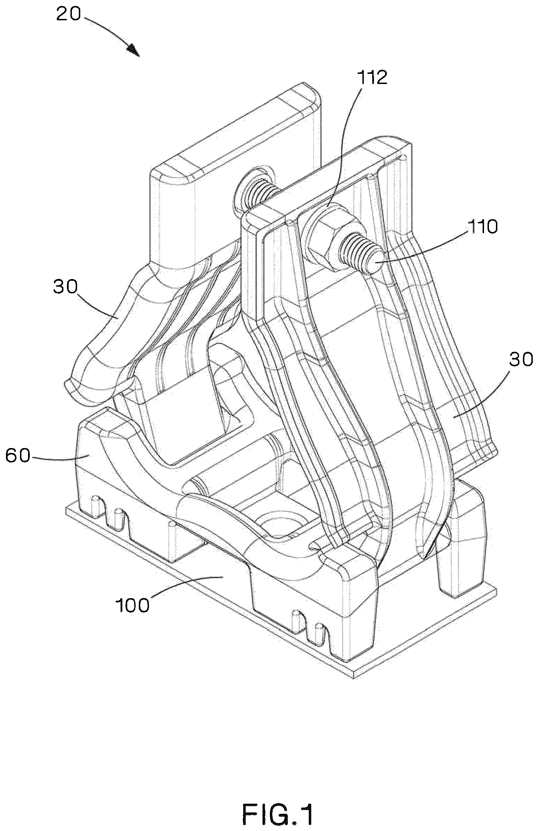

FIG. 1 illustrates a perspective view of a cable cleat assembly 20. The cable cleat assembly 20 is a three-piece assembly held together in a triangular arrangement by a fastener 110, such as a clamping bolt. The cable cleat assembly 20 includes two side bodies 30 and a base 60.

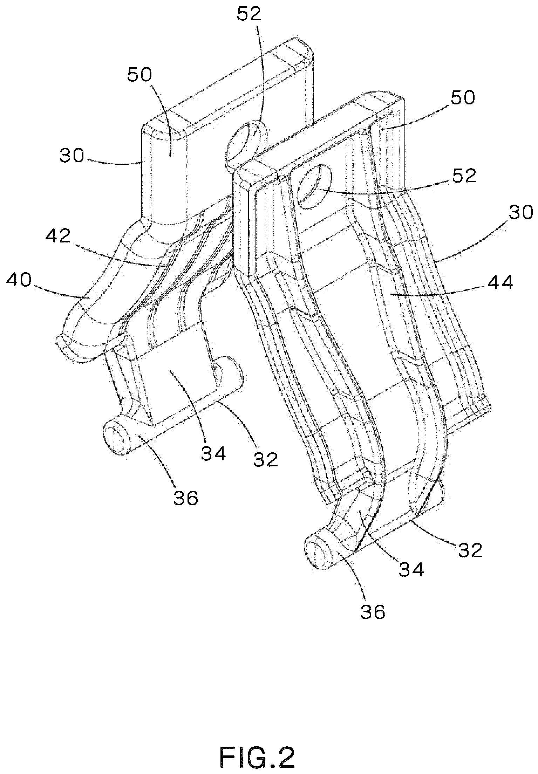

As illustrated in FIG. 2, each side body 30 includes a first end 32 including a mounting member. The mounting member is a narrow portion 34 with intrinsic pegs 36 extending outwardly therefrom. Each side body 30 includes a wider curved middle section 40 with securing ribs 42 located on the inner surfaces of the middle section 40. The securing ribs 42 hold the cables under axial loads when the cable cleat assembly 20 is installed. The side bodies 30 also include exterior flanges 44 extending from the outer surface of the middle section 40. The wider middle section 40 of the side bodies 30 leads to the second end 50. The second end 50 of each side body 30 is straight with a centered hole 52 for receiving a fastener 110, such as a clamping bolt.

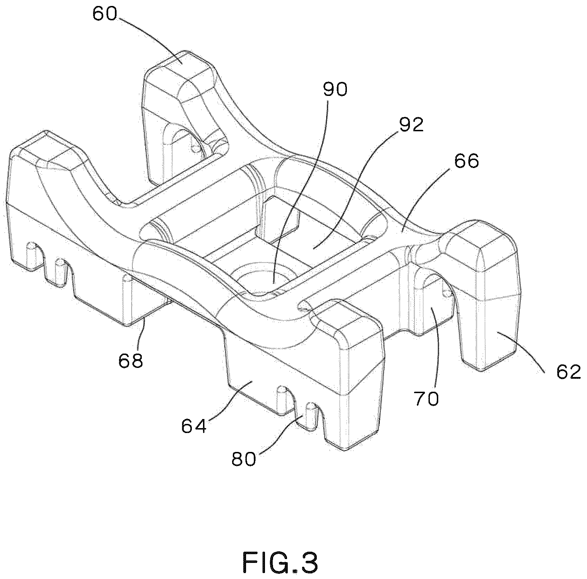

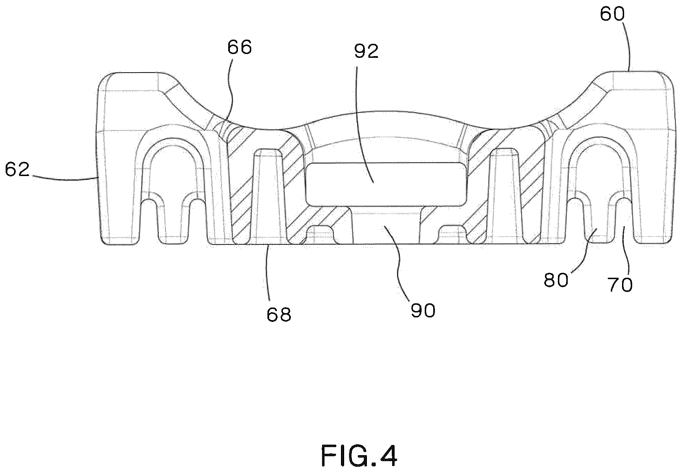

FIGS. 3 and 4 illustrate the base 60 of the cable cleat assembly. The base 60 includes two open ends 62 with slots 70 that are accessible from the bottom 68 of the base 60. The sides 64 of the base 60 include a plurality of tabs 80 with each tab 80 positioned adjacent one of the slots 70.

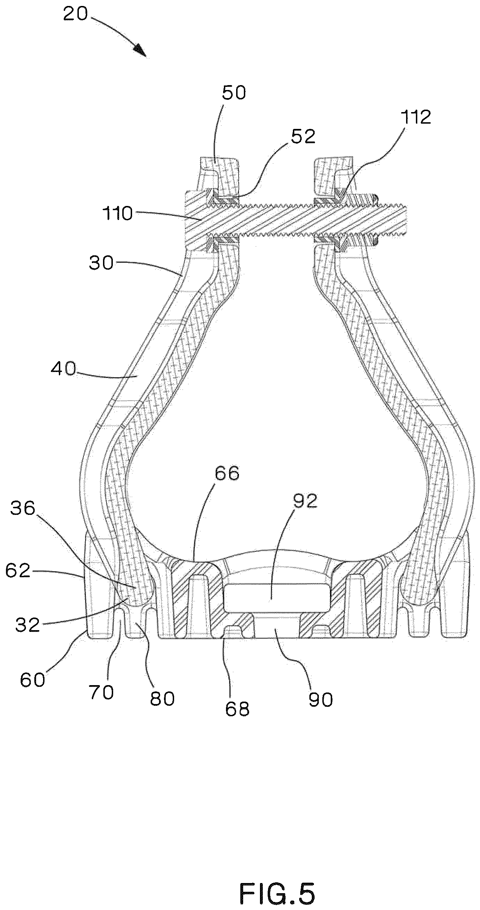

As illustrated in FIG. 5, the slots 70 in the base 60 are designed to mate with the intrinsic pegs 36 extending from the first end 32 of each side body 30. The intrinsic pegs 36 of each side body 30 slide into the slots 70 in the base 60 from the bottom 68 of the base 60.

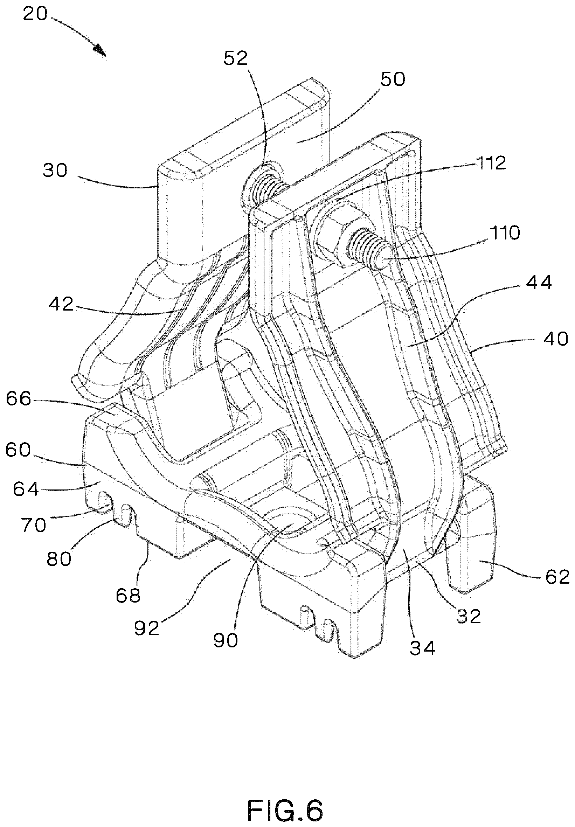

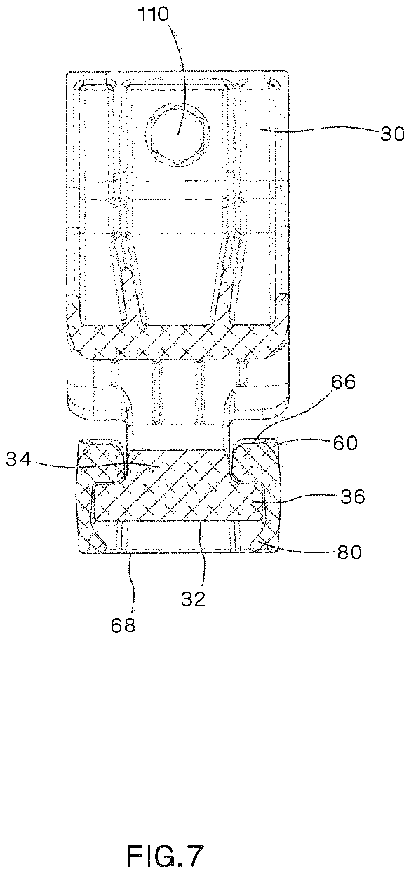

As illustrated in FIGS. 6 and 7, the tabs 80 in the sides 64 of the base 60 are bent inward toward the center of the cable cleat to retain one of the intrinsic pegs 36 positioned in the slots 70 in the base 60. The bent tabs 80 hold the intrinsic pegs 36 in the slots 70 without additional fasteners.

The intrinsic pegs 36 act as a hinge enabling the side bodies 30 to rotate from an open position to a closed position around a plurality of cables. The double hinge feature allows the cable cleat assembly to accommodate a range of cable diameters. Once the side bodies 30 are pivoted to a closed position, the fastener 110 is positioned through the holes 52 in the second end 50 of each side body 30 to secure the cable cleat assembly.

The peg and slot design of the cable cleat assembly allows for simple manufacture with no side actions and minimal secondary processing thereby reducing production costs. Additionally, there is no need for a separate hinge, as with typical cable cleat designs thereby preventing issues with galvanic corrosion.

The base and side bodies of the cable cleat assembly are manufactured with a die-cast aluminum. However, the cable cleat assembly may also be manufactured from injection molded plastic or cast stainless steel.

The cable cleat assembly may include an insulating spacer 100 positioned between the cable cleat base and the ladder rack to prevent issues with galvanic corrosion. The cable cleat assembly may also include insulating washers 112 positioned in between the fasteners and the second end of the cable cleat.

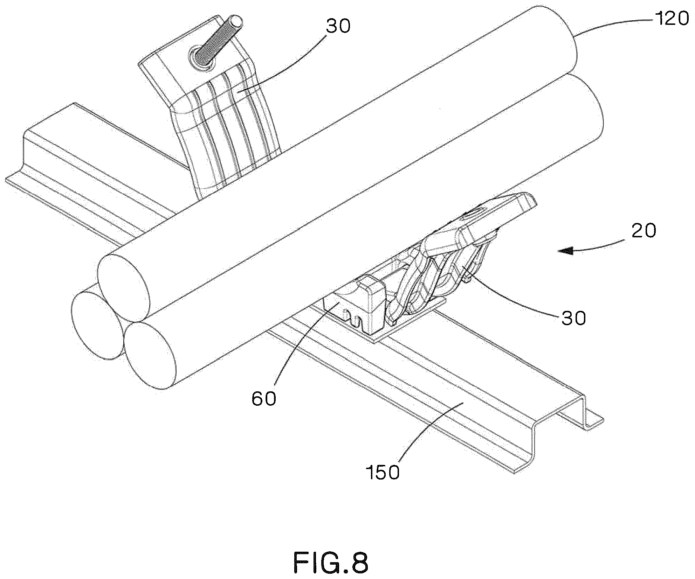

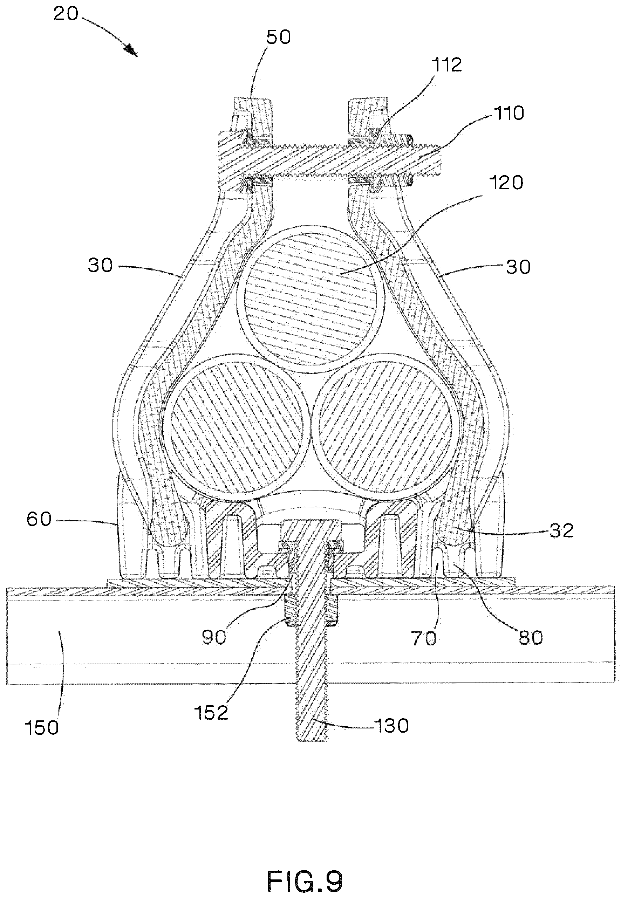

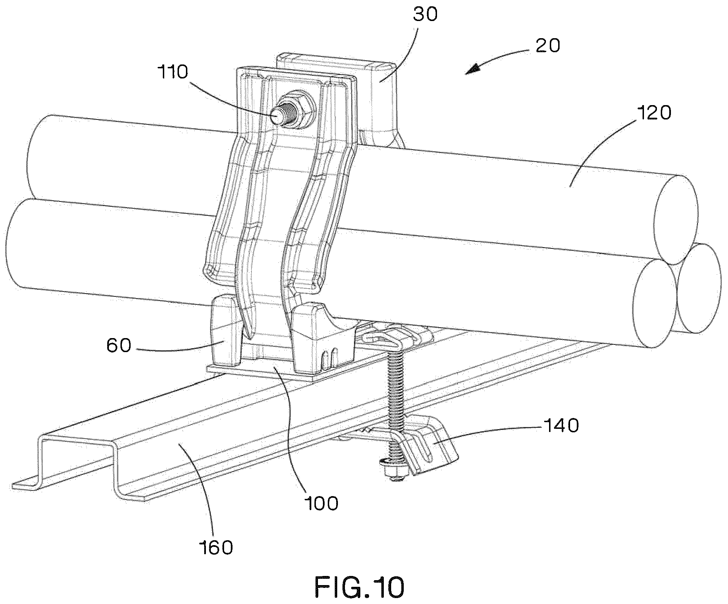

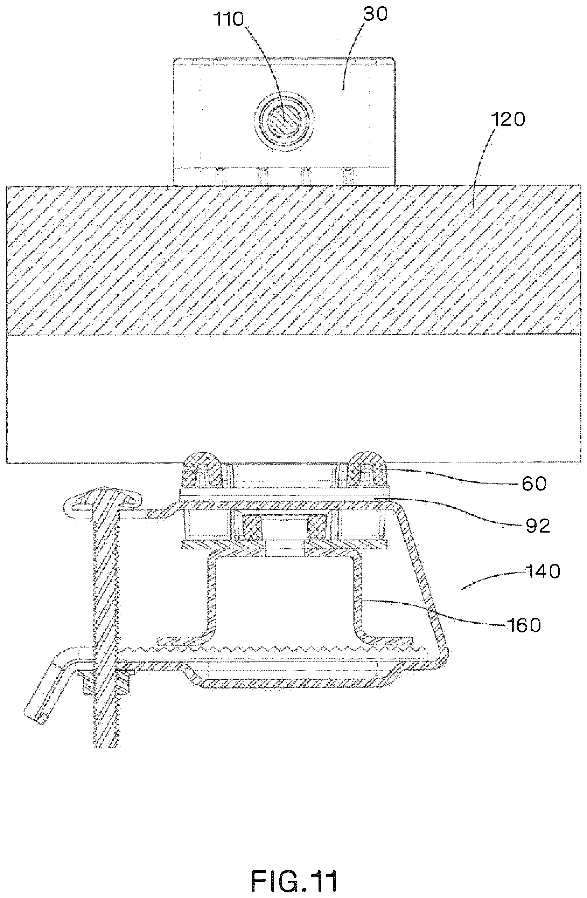

FIGS. 8-11 illustrate a cable cleat assembly securing cables to a ladder rack, an embodiment useful for understanding the invention. The base 60 provides for both bolt and bracket securement methods to secure the cable cleat assembly to a ladder rack, or without securement as an intermediate cleat. As illustrated in FIGS. 3 and 4, the base 60 includes a top 66 with a hole 90 located at the center of the base. The hole 90 receives a fastener 130 to secure the base to a ladder rack 150 or tray (see FIGS. 8-9). The sides 64 of the base 60 include a bracket slot 92 located at the center of the base 60 between the tabs 80. The bracket slot 92 extends from one side 64 of the base 60 to the opposite side 64 of the base 60 over the hole 90. The bracket slot 92 is designed to receive a bracket 140 for mounting on a ladder rack 150 (see FIGS. 10-11). As illustrated in FIGS. 8-11, the cable cleat assembly is centered over the ladder rack with each securement method.

As illustrated in FIGS. 8-9, the cable cleat assembly 20 is installed directly on the ladder rack 150. The cable cleat assembly 20 is installed via a fastener 130, such as a mounting bolt. The cable cleat assembly 20 is installed onto the ladder rack 150 before the trefoil cables 120 can be placed on the base 60 of the cable cleat assembly 20 because access to the fastener 130 is required for typical installations in which the cables are positioned directly over fastener 130. Cables 120 are then individually placed in the cable cleat assembly 20, the side bodies 30 are pivoted to the closed positioned and fastened in place via fastener 110.

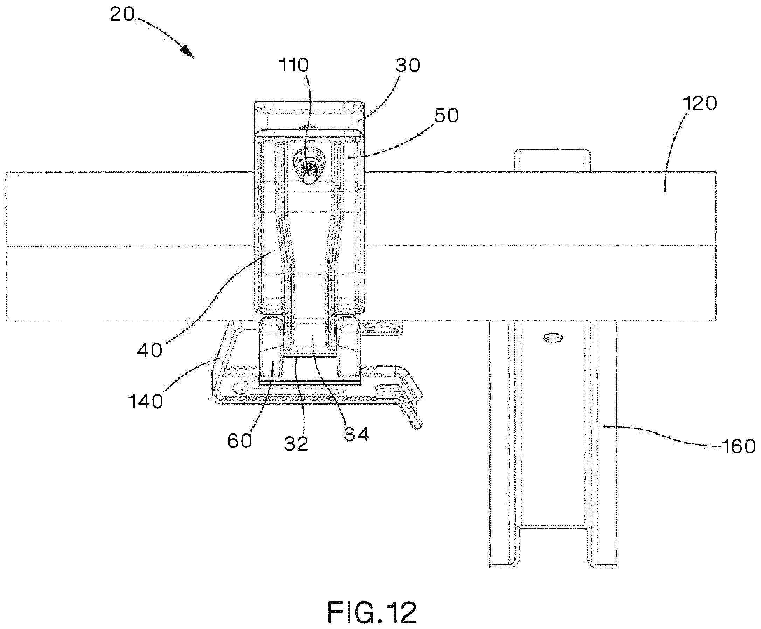

Alternatively, as illustrated in FIGS. 10-12, when there are no holes in the ladder rack 160, the cable cleat assembly 20 may be secured to the ladder rack 160 via bracket 140 that wraps around the ladder rack 160. When the cable cleat assembly 20 is attached via a bracket 140, the cable cleat assembly 20 may be assembled around existing trefoil cables 120 and then slid into place around the ladder rack 160 (see FIG. 12).

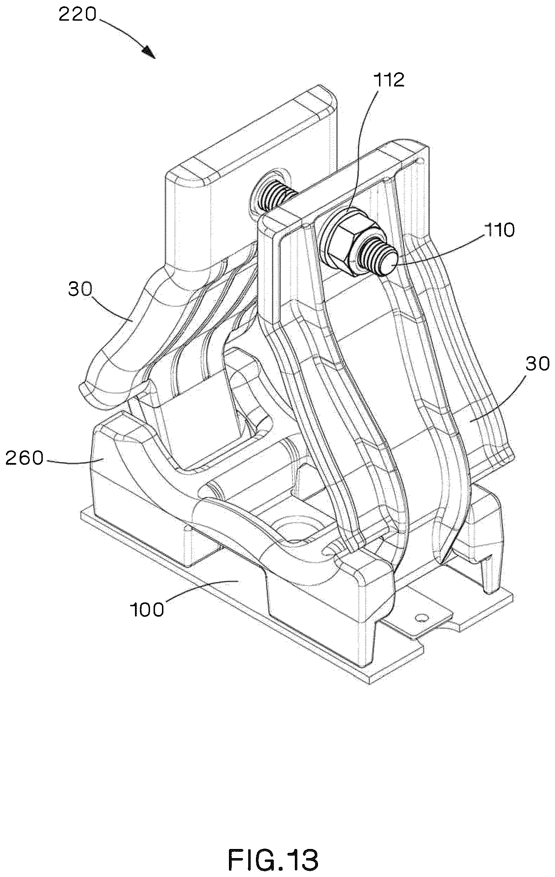

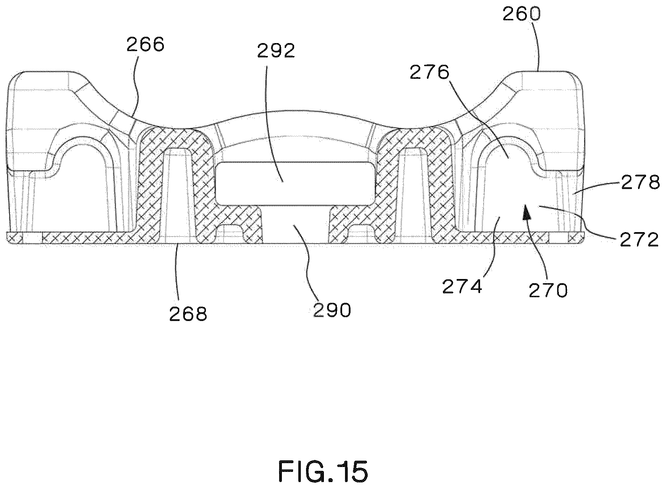

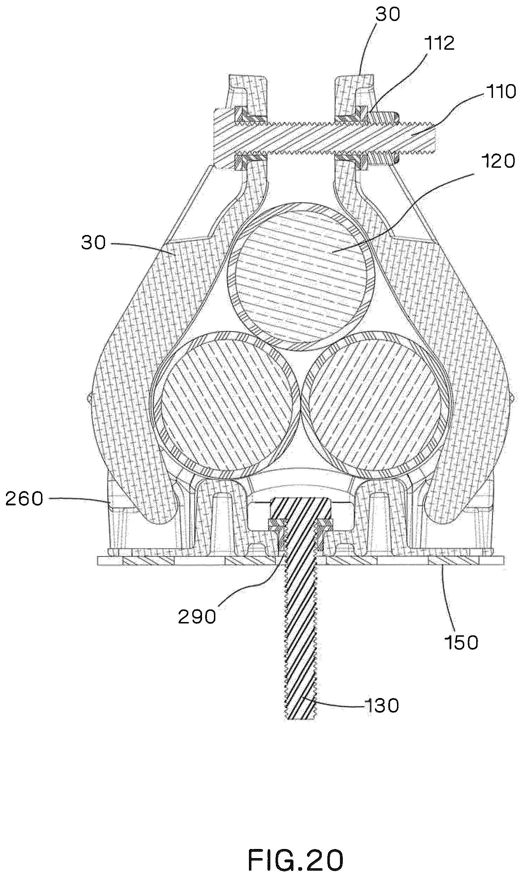

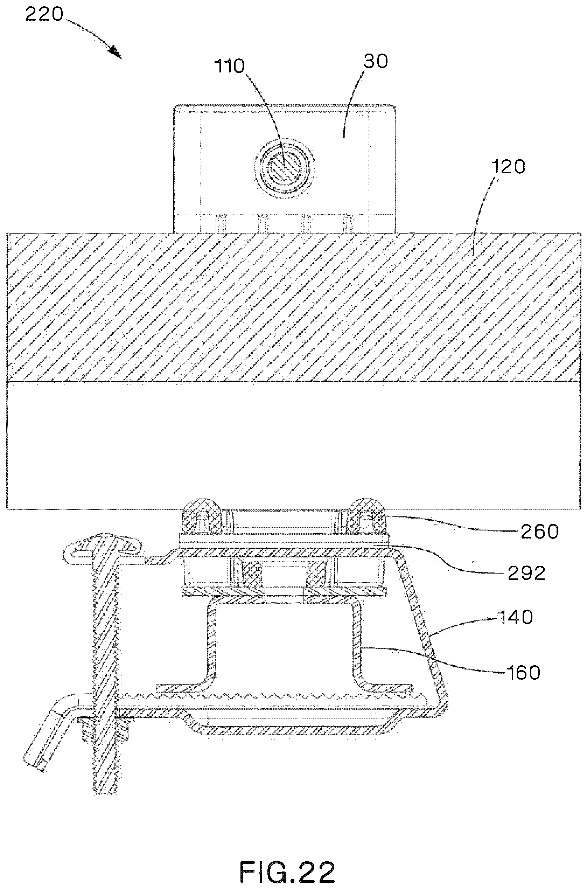

FIGS. 13-22 illustrate a cable cleat assembly 220. The cable cleat assembly 220 includes two side bodies 30 (see FIG. 2) and a base 260. The cable cleat assembly 220 is held together by a fastener 110, such as a clamping bolt.

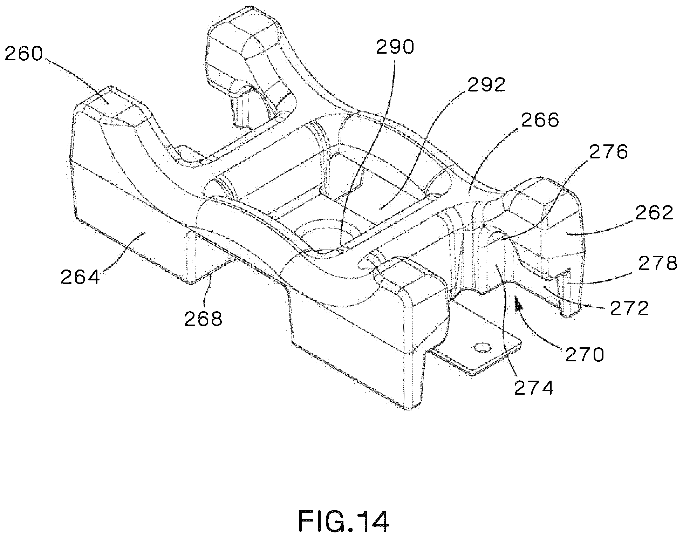

The side bodies 30 in cable cleat assembly 220 are illustrated and described above with respect to FIG. 2. As illustrated in FIGS. 14-15, the base 260 includes two open ends 262, sides 264, a top 266, and a bottom 268. The open ends 262 provide access to slots 270. The slots 270 are defined by a horizontal portion 272, a vertical portion 274, and a semi-circular top portion 276. Tabs 278 are positioned at the open ends 262 to reduce access to the horizontal portion 272 of the slot.

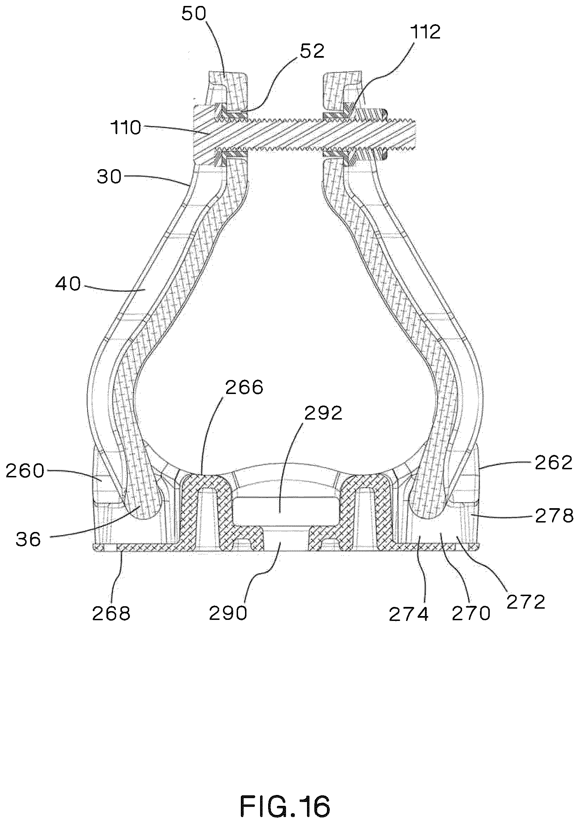

One of the side bodies 30 is press fit into one of the slots 270 in the base 260. The tabs 278 enable the side bodies 30 to be press fit into the base 260 and maintain the side bodies 30 in the slots 270 without additional fasteners. As illustrated in FIG. 16, the intrinsic pegs 36 that extend from the first end 32 of each side body 30 are positioned in the semi-circular top portion 276 of the slots 270.

The cable cleat assembly 220 may also include an insulating spacer 100 positioned between the cable cleat base and the ladder rack to prevent issues with galvanic corrosion. The cable cleat assembly may also include insulating washers 112 positioned in between the fasteners and the second end of the cable cleat.

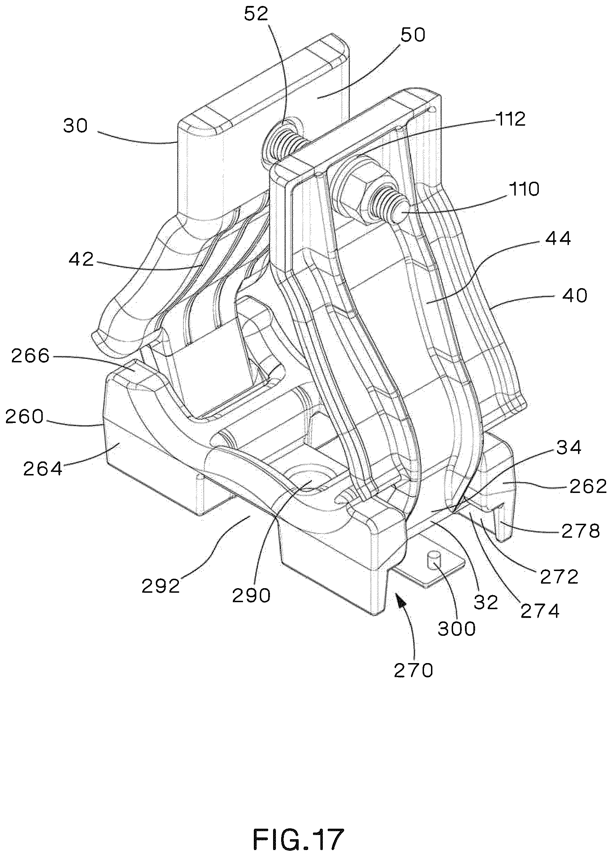

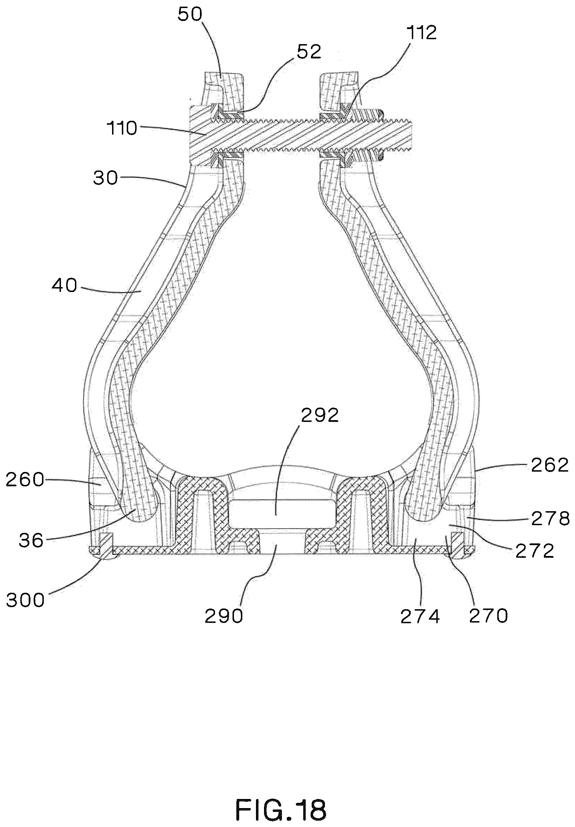

FIGS. 17 and 18 illustrate the cable cleat assembly 220 with blind rivets 300. The blind rivets 300 may be used, if desired, to assist with the press fit of the side bodies 30 by containing the side bodies 30 within the base 260 while being installed.

As discussed above, the intrinsic pegs 36 act as a hinge enabling the side bodies 30 to rotate from an open position to a closed position around a plurality of cables 120. The double hinge features allows the cable cleat assembly 220 to accommodate a range of cable diameters. Once the side bodies 30 are pivoted to a closed position, a fastener 110 is installed through the holes 52 in the second end 50 of each side body 30 to secure the cable cleat assembly 220.

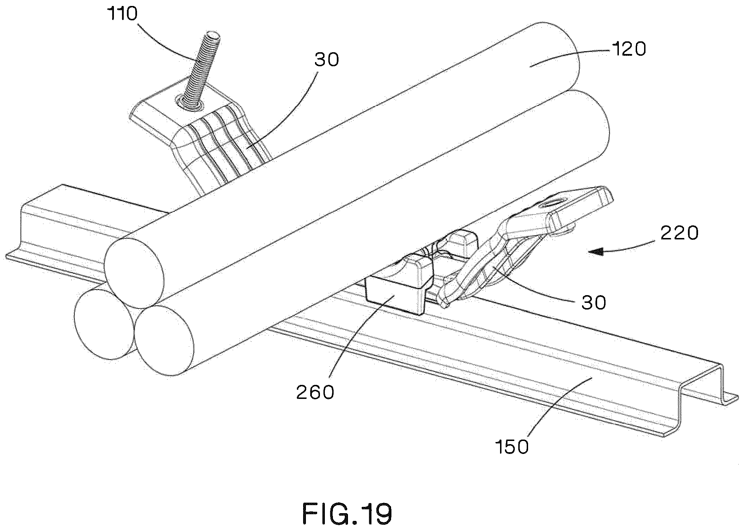

FIGS. 19-22 illustrate the cable cleat assembly 220 securing cables 120 to a ladder rack 150, 160. The base 260 provides for both bolt and bracket securement methods to secure the cable cleat assembly 220 to a ladder rack 150, 160.

As illustrated in FIGS. 14-15, the base 260 includes a hole 290 located at the center of the base 260. A fastener 130 is received in the hole 290 to secure the base 260 to a ladder rack 150 (see FIGS. 19-20).

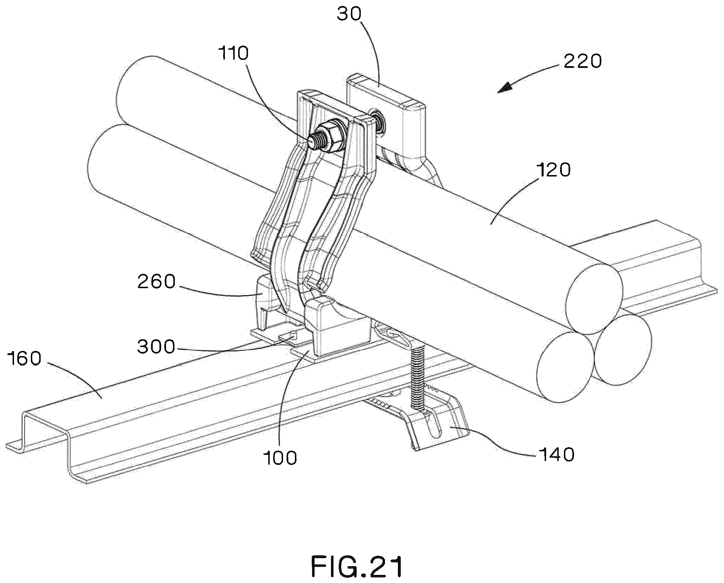

Also illustrated in FIGS. 14-15, the base 260 includes a bracket slot 292 that extends from one side 264 of the base 260 to the opposite side 264 of the base 260. The bracket slot 292 is designed to receive a bracket 140 for mounting on a ladder rack 160 (see FIGS. 21-22).

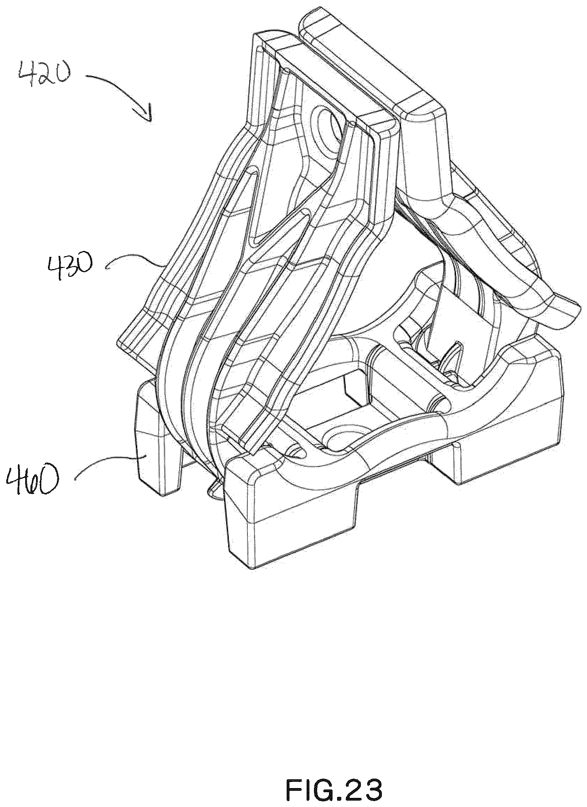

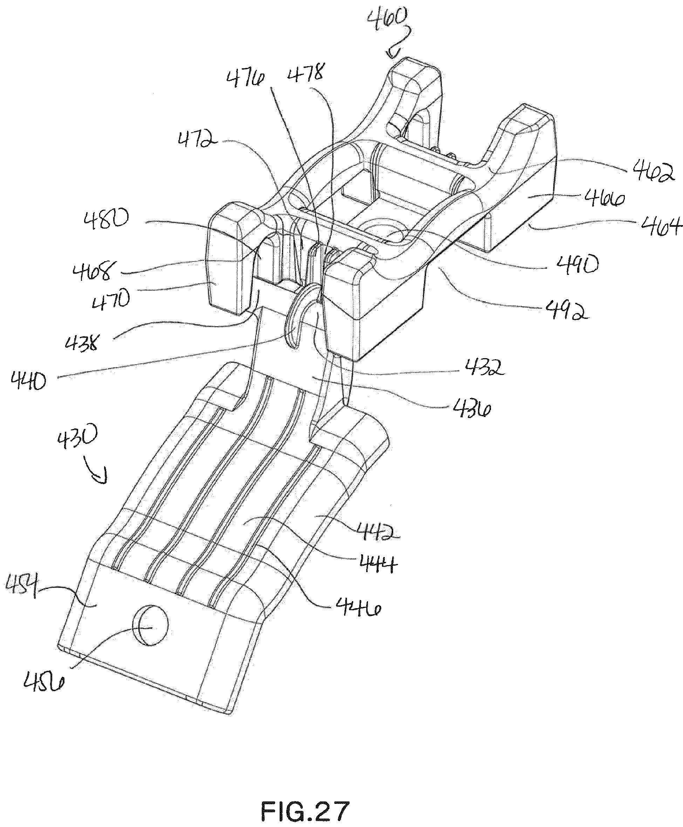

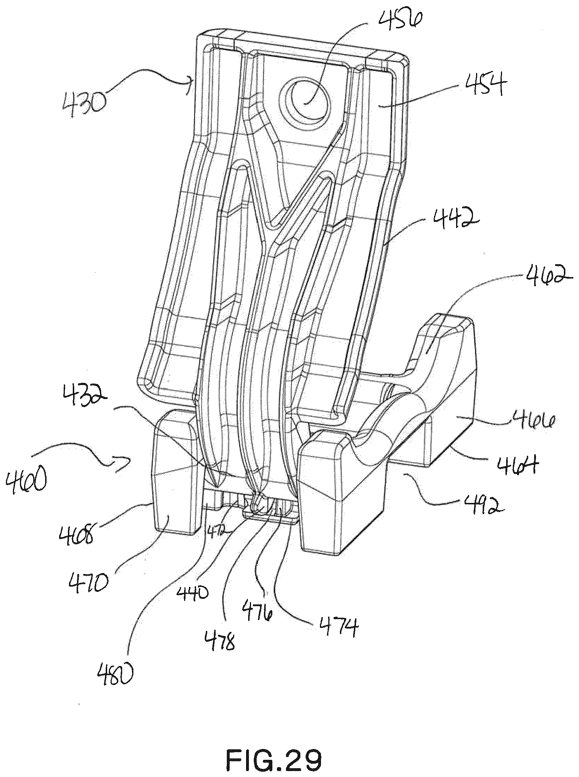

FIGS. 23-29 illustrate a cable cleat assembly 420, which is according to the invention. The cable cleat assembly 420 includes a base 460 and two identical side bodies 430 that would be secured to each other by a fastener, as described above. The cable cleat assembly 420 also includes features that aid in the assembly of the side bodies 430 to the base 460. As a result, the side bodies 430 are secured to the base 460 without the use of tools.

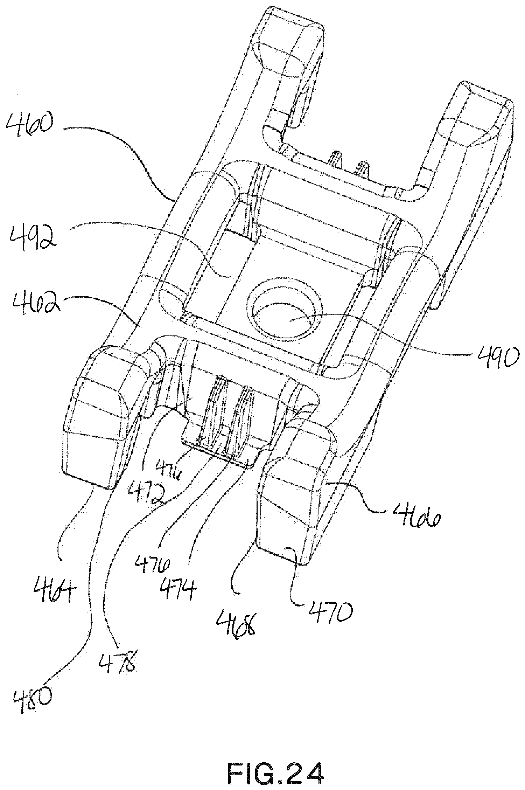

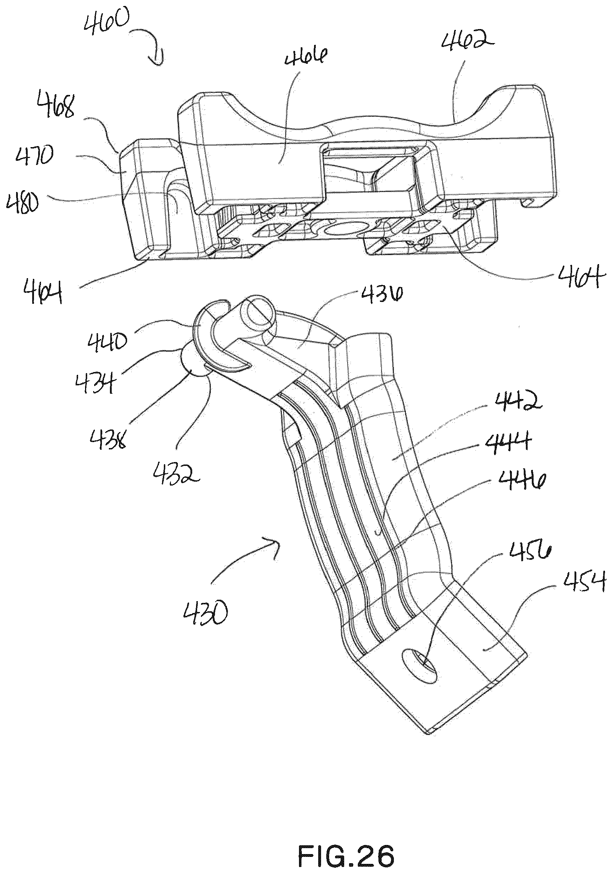

As illustrated in FIG. 24, the base 460 includes a top 462, a bottom 464, sides 466, and two ends 468. Each end 468 is defined by two outer end members 470 and an inner end member 472 positioned between the outer end members 470. Slots 480 are also formed in the base 460. The slots 480 are accessible from the bottom 464 of the base 460 (see FIG. 26). The slots 480 are hidden by the outer end members 470 and the sides 466 of the base 460. A retaining tab 474 with two parallel alignment ribs 476 extends from each inner end member 472 of the base 460 into an open area of the base 460. The retaining tab 474 and alignment ribs 476 are centered between the sides 466 of the base 460. The alignment ribs define an opening or slot therebetween.

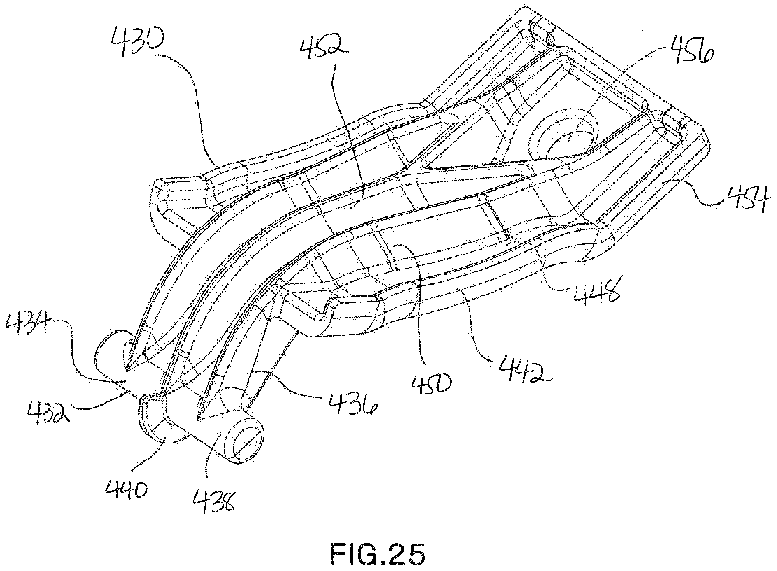

As illustrated in FIG. 25, the side body 430 includes a first end 432 with a mounting member 434. The mounting member 434 includes a narrow portion 436 with a cylindrical outwardly extending peg or pin 438 and a circular rib 440 positioned along a center line of the side body 430. The circular rib 440 wraps around the peg or pin 438. Each side body 430 includes a wider curved middle section 442 with securing ribs 446 located on the inner surface 444 of the middle section (FIG. 26). The securing ribs 446 hold the cables under axial loads when the cable cleat assembly 420 is installed. The side bodies 430 also include exterior flanges 450 and a center flange 452 extending from the outer surface 448 of the middle section 442 of the side bodies 430. The wider middle section 442 leads to the second end 454. The second end 454 of each side body 430 is straight with a centered hole 456 for receiving a fastener, such as a clamping bolt.

Similar to the base in the cable cleat assemblies discussed above, the base 460 includes a hole 490 located at the center of the base 460. The hole 490 receives a fastener to secure the base 460 to a ladder rack or tray. The sides 466 of the base 460 include a bracket slot 492 located at the center of the base 460. The bracket slot 492 extends from one side 466 of the base to the opposite side 466 of the base 460 over the hole 490. The bracket slot 492 is designed to receive a bracket for mounting the base 460 on a ladder rack.

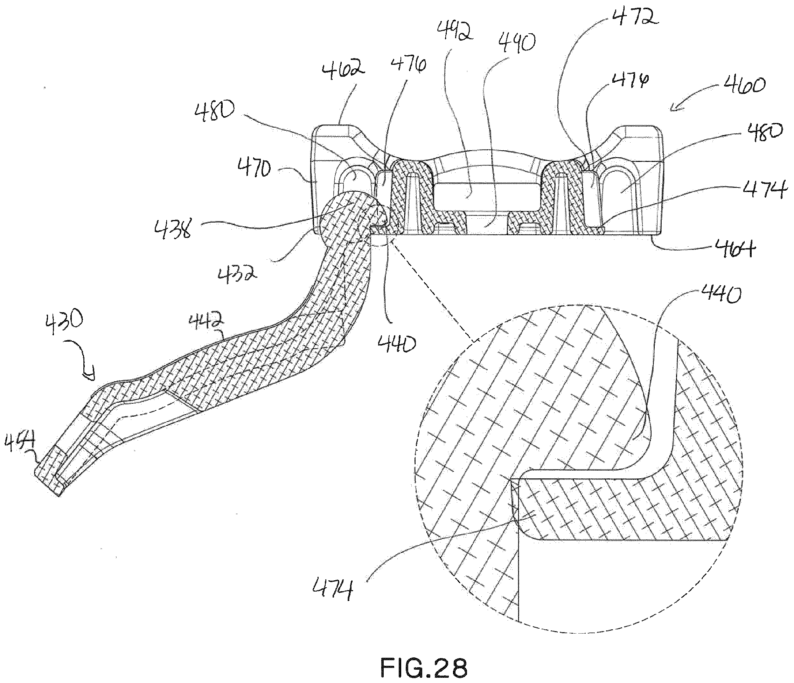

FIGS. 26-28 illustrate one of the side bodies 430 being assembled to the base 460. As illustrated in FIG. 26, the side body 430 is positioned below the base 460 with the pegs 438 aligned with the slots 480 in the base 460. The circular rib 440 is also aligned with the slot 478 between the alignment ribs 476. Once the pegs 438 are positioned in the slots 480 in the base 460, the end of the circular rib 440 is positioned above the edge of the retaining tab 474. The side body 430 is then rotated past an interference fit between the circular rib 440 and the retaining tab 474 (see FIG. 28) until the pegs 438 are fully installed in the slots 480 in the base 460. This interference fit prevents any accidental removal of the side body 430 from the base 460 of the assembled cable cleat.

The circular rib 440 aligns the side body 430 to the base 460 as it fits in the slot 478 between the two aligned ribs 476 extending from the base 460. The placement of the circular rib 440 prevents the side body 430 from twisting excessively but still allows the side body 430 to articulate from a fully open position to a fully closed position. The circular rib 440 also provides the appropriate spacing for the cable cleat assembly. The diameter of the circular rib 440 is designed to enable the side body 430 to raise when the side body 430 is pushed against the retaining tab 474 during installation. The end of the circular rib 440 acts as a leverage point during assembly and the entire side body 430 acts as a lever with a large mechanical advantage.

The second side body 430 is mounted the same way on the opposite side 466 of the base 460.

The cable cleat assembly in accordance with the invention illustrated in FIGS. 23-29 is inexpensive and easy to manufacture and assemble. The side bodies are secured and retained in the base without using tools. The new retaining tab, alignment ribs, and circular rib improve the alignment and spacing of the side bodies with respect to the base.

## Claims

1. A cable cleat assembly (420) for securing cables to a ladder rack, the cable cleat assembly comprising:
a base (460) with a top (462), a bottom (464), sides (466), and two open ends (468);
wherein each open end includes a retaining tab (474) with alignment ribs (476) extending from the end; and
two side bodies (430), each side body is pivotally mounted to the base;
wherein each side body has a first end (432), a middle section (442), and a second end (454); each first end has a mounting member (434), the mounting member having a peg (438), wherein the peg extends from each of two sides of the mounting member, and a circumferential rib (440) extending around the mounting member; and
wherein the circumferential rib (440) of each side body (430) is positioned between the alignment ribs (476) extending from each end (468) of the base (460) to enable each side body to pivot from an open position to a closed position.

2. The cable cleat assembly (420) of claim 1, wherein the base (460) including slots (480) accessible from a bottom (464) of the base, the pegs (438) extending from the side bodies (430) are mounted in the slots.

3. The cable cleat assembly (420) of any preceding claim, wherein each side body (430) includes a wide curved middle section (442), the middle section having securing ribs (446) located on an inner surface (444) of the middle section.

4. The cable cleat assembly (420) of claim 3, wherein the securing ribs (446) are configured to maintain the cables under axial loads when the cable cleat assembly is installed.

5. The cable cleat assembly (420) of any preceding claim, wherein the second end (454) of each side body (430) includes a hole (456) for receiving a fastener to secure the side bodies in a closed position.

6. The cable cleat assembly (420) of any preceding claim, wherein the base (460) includes a center hole (490) and a center slot (492) that extends from a first side (466) to a second opposite side (466) over the hole (490), wherein the base is configured to be directly secured to the ladder rack by a fastener through the center hole (490).

7. The cable cleat assembly (420) of any of claims 1 to 5, wherein the base (460) includes a center hole (490) and a center slot (492) that extends from a first side (466) to a second opposite side (466) over the hole (490), wherein the base is configured to be secured to the ladder rack by a bracket through the center slot (492).

## Patentansprüche

1. Kabelklemmenanordnung (420) zum Sichern von Kabeln an einem Leitergestell, wobei die Kabelklemmenanordnung umfasst:
eine Basis (460) mit einer Oberseite (462), einer Unterseite (464), Seiten (466) und zwei offenen Enden (468);
wobei jedes offene Ende eine Haltelasche (474) mit Ausrichtungsrippen (476) umfasst, die sich von dem Ende aus erstrecken; und
zwei Seitenkörper (430), wobei jeder Seitenkörper schwenkbar an der Basis gelagert ist;
wobei jeder Seitenkörper ein erstes Ende (432), einen Mittelabschnitt (442) und ein zweites Ende (454) aufweist; jedes erste Ende ein Lagerungselement (434) aufweist, wobei das Lagerungselement einen Zapfen (438), wobei sich der Zapfen von jeder der beiden Seiten des Lagerungselements erstreckt, sowie eine umlaufende Rippe (440) aufweist, die sich um das Lagerungselement herum erstreckt; und
wobei die umlaufende Rippe (440) jedes Seitenkörpers (430) zwischen den Ausrichtungsrippen (476) positioniert ist, die sich von jedem Ende (468) der Basis (460) erstrecken, um es jedem Seitenkörper zu ermöglichen, aus einer offenen Position in eine geschlossene Position zu schwenken.

2. Kabelklemmenanordnung (420) nach Anspruch 1, wobei die Basis (460) Schlitze (480) umfasst, die von einer Unterseite (464) der Basis aus zugänglich sind, wobei die sich von den Seitenkörpern (430) erstreckenden Zapfen (438) in den Schlitzen gelagert sind.

3. Kabelklemmenanordnung (420) nach einem der vorhergehenden Ansprüche, wobei jeder Seitenkörper (430) einen breiten gekrümmten Mittelabschnitt (442) aufweist, wobei der Mittelabschnitt Sicherungsrippen (446) aufweist, die sich an einer Innenfläche (444) des Mittelabschnitts befinden.

4. Kabelklemmenanordnung (420) nach Anspruch 3, wobei die Sicherungsrippen (446) dazu ausgelegt sind, die Kabel unter axialen Lasten zu halten, wenn die Kabelklemmenanordnung installiert ist.

5. Kabelklemmenanordnung (420) nach einem der vorhergehenden Ansprüche, wobei das zweite Ende (454) jedes Seitenkörpers (430) ein Loch (456) zum Aufnehmen eines Befestigungselements umfasst, um die Seitenkörper in einer geschlossenen Position zu sichern.

6. Kabelklemmenanordnung (420) nach einem der vorhergehenden Ansprüche, wobei die Basis (460) ein Mittelloch (490) und einen Mittelschlitz (492) umfasst, der sich von einer ersten Seite (466) zu einer zweiten, gegenüberliegenden Seite (466) über das Loch (490) erstreckt, wobei die Basis dazu ausgelegt ist, mittels eines Befestigungselements durch das Mittelloch (490) direkt an dem Leitergestell befestigt zu werden.

7. Kabelklemmenanordnung (420) nach einem der Ansprüche 1 bis 5, wobei die Basis (460) ein Mittelloch (490) und einen Mittelschlitz (492) umfasst, der sich von einer ersten Seite (466) zu einer zweiten, gegenüberliegenden Seite (466) über das Loch (490) erstreckt, wobei die Basis dazu ausgelegt ist, mittels eines Bügels durch den Mittelschlitz (492) an dem Leitergestell befestigt zu werden.

## Revendications

1. Ensemble serre-câble (420) pour fixer des câbles à un support d'échelle, l'ensemble serre-câble comprenant :
une base (460) avec un haut (462), un bas (464), des côtés (466), et deux extrémités ouvertes (468) ;
dans lequel chaque extrémité ouverte inclut une patte de retenue (474) avec des nervures d'alignement (476) s'étendant depuis l'extrémité ; et
deux corps latéraux (430), chaque corps latéral est monté de façon pivotante sur la base ;
dans lequel chaque corps latéral a une première extrémité (432), une section médiane (442), et une seconde extrémité (454) ; chaque première extrémité a un élément de montage (434), l'élément de montage ayant un taquet (438), dans lequel le taquet s'étend depuis chacun de deux côtés de l'élément de montage, et une nervure circonférentielle (440) s'étendant autour de l'élément de montage ; et
dans lequel la nervure circonférentielle (440) de chaque corps latéral (430) est positionnée entre les nervures d'alignement (476) s'étendant depuis chaque extrémité (468) de la base (460) pour permettre à chaque corps latéral de pivoter depuis une position ouverte jusqu'à une position fermée.

2. Ensemble serre-câble (420) de la revendication 1, dans lequel la base (460) inclut des fentes (480) accessibles depuis un bas (464) de la base, les taquets (438) s'étendant depuis les corps latéraux (430) sont montés dans les fentes.

3. Ensemble serre-câble (420) d'une quelconque revendication précédente, dans lequel chaque corps latéral (430) inclut une section médiane courbée large (442), la section médiane ayant des nervures de fixation (446) situées sur une surface intérieure (444) de la section médiane.

4. Ensemble serre-câble (420) de la revendication 3, dans lequel les nervures de fixation (446) sont configurées pour maintenir les câbles sous des charges axiales lorsque l'ensemble serre-câble est installé.

5. Ensemble serre-câble (420) d'une quelconque revendication précédente, dans lequel la seconde extrémité (454) de chaque corps latéral (430) inclut un trou (456) destiné à recevoir une pièce de fixation pour fixer le corps latéraux dans une position fermée.

6. Ensemble serre-câble (420) d'une quelconque revendication précédente, dans lequel la base (460) inclut un trou central (490) et une fente centrale (492) qui s'étend depuis un premier côté (466) jusqu'à un second côté opposé (466) par-dessus le trou (490), dans lequel la base est configurée pour être fixée directement au support d'échelle par une pièce de fixation à travers le trou central (490).

7. Ensemble serre-câble (420) de quelconques des revendications 1 à 5, dans lequel la base (460) inclut un trou central (490) et une fente centrale (492) qui s'étend depuis un premier côté (466) jusqu'à un second côté opposé (466) par-dessus le trou (490), dans lequel la base est configurée pour être fixée au support d'échelle par un appui à travers la fente centrale (492).
